# EUROPÄISCHE PATENTSCHRIFT

(11) **EP 1 697 193 B1**
(45) Veröffentlichungstag und Bekanntmachung des Hinweises auf die Patenterteilung: **09.05.2007**
(21) Anmeldenummer: 04819181.1
(22) Anmeldetag: 27.11.2004
(51) Int. Cl.: B60T 17/22, B60T 10/02

(54) **VERFAHREN ZUR ÜBERWACHUNG EINER BREMSMOMENTÄNDERUNG EINES RETARDERS**
METHOD FOR MONITORING A BRAKING TORQUE MODIFICATION OF A RETARDER
PROCEDE POUR SURVEILLER LA VARIATION DU COUPLE DE FREINAGE D'UN RALENTISSEUR

(30) Priorität: 23.12.2003 DE 10361448
(43) Veröffentlichungstag der Anmeldung: 06.09.2006
(73) Patentinhaber: Voith Turbo GmbH & Co. KG, 89522 Heidenheim (DE)
(72) Erfinder: SCHERER, Roland, 74564 Crailsheim (DE)
(74) Vertreter: Koch-Huld, Annegret Christa
(86) Internationale Anmeldenummer: PCT/EP2004/013467
(87) Internationale Veröffentlichungsnummer: WO 2005/066006

(56) Entgegenhaltungen:
- EP-A- 0 296 728
- EP-A- 1 308 359
- WO-A-03/020562
- DE-A1- 19 857 535
- US-A- 4 477 124

## Beschreibung

Die vorliegende Erfindung betrifft die Überwachung einer Bremsmomentänderung eines Retarders, wobei die Bremsmomentänderung durch einen Stelldruck-Regelkreis geregelt wird. Insbesondere betrifft die Erfindung ein Verfahren zur Überwachung einer Bremsmomentänderung beziehungsweise zur Überwachung einer Bremsmomentänderung und zum Erkennen von Fehlern.

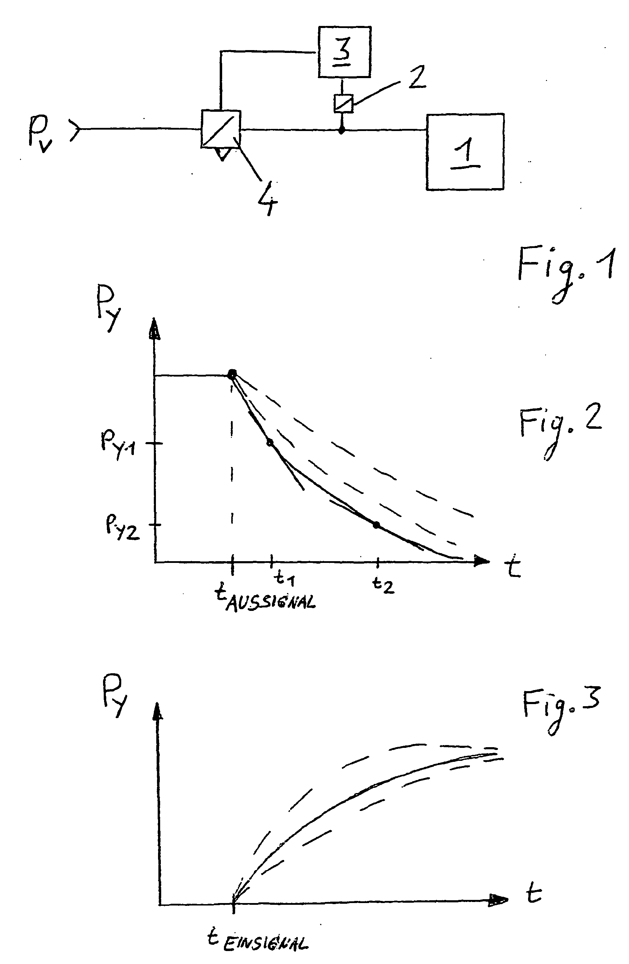

Herkömmlich werden Retarder von Kraftfahrzeugen sowie vergleichbare Systeme mittels stufig oder stufenlos dosierbarem Stelldruck (pneumatischer Druck pY) geregelt beziehungsweise gesteuert, wobei im Stelldruck-Regelkreis ein Drucksensor installiert ist. Dieser Drucksensor wird ausschließlich für Regelungszwecke beziehungsweise zur Toleranzminimierung bei der Einstellung eines vorgegebenen Stelldruckes für den Retarder herangezogen. Die Figur 1 zeigt ein solches Retardersystem mit einer elektronischen Steuerung, wobei der Retarder mit dem Bezugszeichen 1 versehen ist, der Drucksensor mit dem Bezugszeichen 2, und die elektrische Kontrolleinheit durch das Bezugszeichen 3 repräsentiert wird, sowie ein elektropneumatisches Ventil durch das Bezugszeichen 4. P_{V} bezeichnet den Druck eines Vorratssystems für das Arbeitsmedium des Retarders, wobei das Arbeitsmedium beispielsweise in einem Vorratsbehälter gespeichert ist. EP 1 308 359 beschreibt einen gattunggemäßen Retarder.

Da Retarder, auch hydrodynamische Bremsen genannt, die Funktion eines Zusatz-Bremssystems haben, ist das Abschalten beziehungsweise das Stilllegen im Falle eines Fehlers beispielsweise im Steuerungssystem zulässig. Das heißt kurz gesagt, der sichere Zustand ist der Aus-Zustand. Bei der Entwicklung von Retardersystemen ist man daher bestrebt, Mittel zum sicheren Ausschalten des Retarders sowie die Sicherstellung dieser Ausschaltfunktionen während der gesamten Nutzungsdauer des Retardersystems bereitzustellen. Eine ungewünschte Veränderung des Ausschaltverhaltens eines Retarders kann zu Schäden am Fahrzeugsystem oder schlimmstenfalls zu Unfällen führen. So besteht beispielsweise bei einem zu langsamen Ausschalten des Retarders in kritischer Situation die Gefahr, dass das Fahrzeug ins Schleudern gerät.

Der Erfindung liegt die Aufgabe zugrunde, ein Verfahren zur Überwachung einer vorgegebenen Bremsmomentänderung darzustellen, welches sich einerseits durch eine hohe Zuverlässigkeit auszeichnet und andererseits in ein vorhandenes Retarder-Gesamtsystem implementiert werden kann, ohne erheblichen zusätzlichen Aufwand oder insbesondere das Vorsehen zusätzlicher Bauteile zu verursachen.

Die erfindungsgemäße Aufgabe wird durch ein Verfahren mit den Merkmalen des Anspruchs 1 gelöst, ferner durch eine erfindungsgemäße Verwendung gemäß Anspruch 13. Die Unteransprüche beschreiben besonders vorteilhafte Ausführungen der Erfindung.

Durch das erfindungsgemäße Verfahren ist es möglich, eine sichere Überwachung einer Bremsmomentänderung, beispielsweise eines Ausschaltvorgangs oder eines Einschaltvorgangs, zur Verfügung zu stellen. Erfindungsgemäß wird dabei der ohnehin im Stelldruck-Regelkreis des Retarders vorhandene Drucksensor zur Erfassung des dynamischen Verlaufs des Stelldrucks verwendet, wobei mit dem Regelkreis das Retarderbremsmoment durch Anlegen eines vorgegebenen Stelldrucks am Retardereingang geregelt wird. Dieser erfasste dynamische Verlauf stellt somit einen Ist-Verlauf dar und wird mit mindestens einem vorgegebenen Soll-Verlauf verglichen. Anhand des Ergebnisses dieses Soll-Ist-Vergleiches wird, sofern vorgegebene Kriterien erfüllt sind, wie beispielsweise wenn der Ist-Verlauf um ein vorgegebenes Ausmaß vom Soll-Verlauf abweicht, eine Warnmeldung ausgegeben, und alternativ oder zusätzlich kann der Retarder beziehungsweise die Retardersteuerung, welche insbesondere durch ein Retarder-Steuergerät erfolgt, in einen Zustand versetzt werden, dass ein zukünftiges Einschalten des Retarders durch einen Fahrzeugbediener verhindert wird. Der Retarder wird sozusagen stillgelegt. Eine solche Stilllegung kann dann beispielsweise durch eine Fachwerkstatt nach Behebung der Mängel, welche zu dem gegenüber dem Soll-Verlauf abweichenden Ist-Verlauf geführt haben, wieder aufgehoben werden.

Gemäß einer vorteilhaften Ausführung wird der Soll-Verlauf in Form mindestens einer Soll-Kennlinie vorgegeben. Eine solche Kennlinie kann beispielsweise im Retarder-Steuergerät gespeichert werden. Auch der Vergleich des Ist-Verlaufs mit dem Soll-Verlauf wird vorteilhaft durch das Retarder-Steuergerät ausgeführt. Gemäß einer vorteilhaften Ausführungsform sind mindestens zwei Soll-Kennlinien vorgegeben, nämlich eine erste Vorwam-Kennlinie und eine zweite Stilllegungs-Kennlinie. Bei "Verletzung" der Vorwarn-Kennlinie durch den Ist-Verlauf wird eine Warnung ausgegeben, bei "Verletzung" der Stilllegungs-Kennlinie wird die oben beschriebene Stilllegung des Retarders durchgeführt. Wie eine solche "Verletzung" der Kennlinien erfasst und bewertet werden kann, wird im Nachfolgenden noch im Detail erläutert.

Die vorgegebenen Soll-Kennlinien, gegebenenfalls eine einzige Soll-Kennlinie, können während der Konstruktion des Retardersystems berechnete oder durch Versuch ermittelte, systembezogene Kennlinien sein, insbesondere sogenannte "worst case"-Kennlinien, das heißt Kennlinien, welche erstellt werden bei Annahme des Eintritts der möglichen ungünstigsten Zustände im System. Ferner können in den Kennlinien variable Zustandsgrößen des Systems oder der Umgebung, wie zum Beispiel die Umgebungstemperatur, die Fahrzeugmasse, die Achslast etc., berücksichtigt werden. Alternativ oder zusätzlich kann für jedes Fahrzeug beziehungsweise jeden Retarder individuell eine "adaptive" Kennlinie zu Beginn der Betriebszeit "eingelernt werden", das heißt in Abhängigkeit von zu Beginn der Fahrzeugbetriebszeit erfassten Betriebsgrößen wird diese Kennlinie eingestellt.

Durch den Vergleich des Ist-Verlaufs, das heißt des zeitlichen Verlaufs des erfassten Stelldrucks, mit dem Soll-Verlauf ist es möglich, kritische Veränderungen, das heißt ungewöhnliche Veränderungen des Entlüftungsverhaltens des Stelldrucks, insbesondere bei der weitgehend vollständigen Entleerung des Retarders oder der Entleerung des Retarders auf ein vorgegebenes Befüllungsmaß, zu erkennen und geeignete Maßnahmen einzuleiten. Falls zum Beispiel eine Vorwarn-Grenzlinie vorgegeben ist, kann durch den Vergleich entschieden werden, ob das Retardersystem noch weiter genutzt werden kann (beispielsweise mit einer Wammeldung an den Fahrzeugbetreiber, dass das System geprüft werden muss) oder ob der Retarder ab sofort nicht mehr benutzbar ist und beispielsweise per Retardersteuerung ausgeschaltet bleibt (hier wird vorteilhaft eine Warnung an den Betreiber ausgegeben, dass der Retarder außer Funktion gesetzt wurde).

Gemäß einer vorteilhaften Ausführungsform der Erfindung umfasst der vorgegebene Soll-Verlauf zwei Soll-Kennlinien, nämlich eine Vorwarn-Kennlinie und eine Stilllegungs-Kennlinie. Entweder wird der erfasste zeitliche Verlauf des Stelldrucks sofort mit beiden Kennlinien verglichen oder zunächst nur mit der Vorwarn-Kennlinie. Anhand des Ergebnisses des Vergleichs des erfassten zeitlichen Verlaufs des Stelldrucks mit der Vorwarn-Kennlinie wird dann entschieden, ob auch ein Vergleich mit der Stilllegungs-Kennlinie erforderlich ist. Beispielsweise in dem Fall, dass das Retardermoment abgesenkt werden soll, das heißt, dass durch den Stelldruck-Regelkreis eine Bremsmomentabsenkung vorgegeben wird, sollte vorteilhaft nach Überschreiten der Vorwarn-Kennlinie ein Vergleich des erfassten Stelldrucks mit der Stilllegungs-Kennlinie erfolgen. Sofern in diesem. Fall die Vorwarn-Kennlinie nicht überschritten wird, das heißt, dass der Ist-Verlauf derart nahe am vorgegebenen Soll-Verlauf stattfindet, dass keine Warnung erforderlich ist, kann der Vergleich mit der Stilllegungs-Kennlinie eingespart werden.

Umgekehrt in dem Fall, dass eine Retarderbefüllung stattfindet, das heißt, dass der Stelldruck-Regelkreis eine Bremsmomenterhöhung des Retarders vorgibt, wird zunächst verglichen, ob der Ist-Verlauf die Vorwarn-Kennlinie unterschreitet, und wenn dies der Fall ist, wird der erfasste zeitliche Verlauf des Stelldrucks mit der Stilllegungs-Kennlinie verglichen. In diesem Fall kann der letzte Vergleich ausbleiben, wenn bereits das Vorwarnkriterium nicht erfüllt ist, das heißt, dass der Ist-Verlauf derart nahe am Soll-Verlauf erfolgt, dass die Vorwarn-Kennlinie nicht unterschritten wird.

Beim Unterschreiten oder Überschreiten der Vorwarn-Kennlinie - je nach Regelungsfall - wird vorteilhaft eine Warnmeldung an den Betreiber ausgegeben. Bei einem entsprechenden Überschreiten oder Unterschreiten der Stilllegungs-Kennlinie wird das Retardersystem vorteilhaft stillgelegt, wie bereits oben beschrieben wurde.

Das Überschreiten beziehungsweise Unterschreiten der Soll-Kennlinien durch den Ist-Verlauf wurde im gerade beschriebenen Beispiel anhand eines Vergleichs der absoluten Druckverläufe dargestellt. Es ist jedoch auch möglich, zur Fehlererkennung beziehungsweise zur Überwachung der Bremsmomentänderung andere Größen heranzuziehen, beispielsweise die Zeitspanne zwischen zwei vorgegebenen Druckpunkten, welche vom Stelldruck durchfahren werden. Eine weitere Möglichkeit ist der Vergleich des Stelldruckverlaufsgradienten in einem oder mehreren vorgegebenen Druckpunkten. Der Vorteil dieses Gradientenvergleichs ist die Unabhängigkeit von dem Retarderbremsmoment, welches als Zielvorgabe des Retarderregelkreises eingestellt wird.

Selbstverständlich ist es auch möglich, Stelldruck-Erhöhungen, das heißt eine vorgegebene Erhöhung des Retarderbremsmomentes, durch das erfindungsgemäße Verfahren zu überwachen. Als zusätzliche Einflussgröße in den vorgegebenen Soll-Kennlinien wird vorteilhaft der pneumatische Vorratsdruck herangezogen, das heißt des Druckes des Vorratssystems, beispielsweise in einem oder hinter einem Vorratsbehälter mit Arbeitsmedium des Retarders, da dieser einen direkten Einfluss auf den Anstiegsgradienten des Stelldrucks hat. In Fahrzeugen, bei denen der Vorratsdruck (pV) als Messsignal zur Verfügung steht, kann dieses in den Vergleich des Ist-Verlaufs mit dem Soll-Verlauf einbezogen werden. Im Fehlerfall, das heißt bei einem Druckanstieg außerhalb der Soll-Charakteristik, sollte vorteilhaft berücksichtigt werden, dass auch eine Fehlfunktion des Vorratsdruck-Messsignals vorliegen kann.

In Fahrzeugen ohne Vorratsdruck-Messsignal wird vorteilhaft bei der Erstellung des Soll-Verlaufs beziehungsweise der Soll-Kennlinien der minimal mögliche Vorratsdruck (pVmin) sowie der maximal mögliche Vorratsdruck (pVmax) berücksichtigt. So können beispielsweise bei dem dynamischen Vergleich des Ist-Stelldrucks mit dem Soll-Verlauf eine untere und eine obere Soll-Kennlinie berücksichtigt werden, nämlich eine Soll-Kennlinie, welche den minimal möglichen Vorratsdruck berücksichtigt, und eine Soll-Kennlinie, welche den maximal möglichen Vorratsdruck berücksichtigt. Der Stelldruck (Ist-Verlauf) sollte dann zwischen diesen beiden Soll-Kennlinien als Grenzkurven verlaufen.

Das erfindungsgemäße Verfahren ermöglicht die Erkennung von Fehlfunktionen sowohl beim Ausschalten des Retarders als auch beim Einschalten des Retarders. Ferner kann auch der Verlauf bei einer Bremsmomentänderung auf ein vorgewähltes Ziel-Bremsmoment überwacht werden, wobei das Ziel-Bremsmoment größer ist als Null und kleiner ist als das maximale Bremsmoment des Retarders.

Fehlerquellen, welche zum Beispiel zum vom Soll-Verlauf abweichenden Druckgradienten führen können, sind insbesondere eine Störung des elektropneumatischen Steuerventils, mit welchem der Stelldruck eingestellt wird, beispielsweise durch Fremdkörper oder interne Defekte, eine Leckage oder Querschnittsänderungen. Eine weitere Fehlerursache kann in einer Fehlfunktion des Drucksensors liegen. Natürlich kann auch der Retarder durch beispielsweise Fremdkörper, eine Leckage oder Querschnittsänderungen unmittelbar gestört werden, sowie Fehler im Steuergerät oder im Vorratsdrucksystem vorliegen.

Die Erfindung soll anhand der beigefügten Figuren näher erläutert werden.

Es zeigen:
- Figur 1: schematisch einen Stelldruck-Regelkreis, in dessen Steuergerät (elektronische Kontrolleinheit) das erfindungsgemäße Verfahren implementiert werden kann;
- Figur 2: ein Beispiel für einen erfassten Ist-Verlauf und die Soll-Kennlinien des Soll-Verlaufs beim Ausschalten des Retarders;
- Figur 3: ein Beispiel für zwei Soll-Kennlinien beim Einschalten des Retarders.

In den Figuren 2 und 3 ist der Stelldruck P_{Y} in seinem zeitlichen Verlauf, das heißt über der Zeit t, aufgetragen. Dabei sind jeweils zwei Soll-Kennlinien in gestrichelten Linien dargestellt und der Ist-Verlauf in einer ausgezogenen Linie. Ferner sind in der Figur 2 die Stelldruckgradienten P_{Y1} zum Zeitpunkt t₁ und P_{Y2} zum Zeitpunkt t₂ dargestellt.

In der Figur 2 verläuft der Stelldruck zunächst auf einem linearen hohen Niveau, das heißt, der Retarder bremst mit einem entsprechend großen Bremsmoment. Sobald der Betreiber durch Betätigung einer entsprechenden Eingabevorrichtung die Funktion ausgewählt hat, dass der Retarder ausgeschaltet werden soll, beginnt der Stelldruck P_{Y}, beginnend mit dem Zeitpunkt t_{AUSSIGNAL} abzufallen. Wie man sieht, verläuft im dargestellten Beispiel der Ausschaltvorgang im unkritischen Bereich, das heißt unterhalb der Vorwarn-Kennlinie und der darüber angeordneten Stilllegungs-Kennlinie.

In der Figur 3 ist ein Einschaltvorgang dargestellt, beginnend zur Zeit des Einschaltsignals t_{EINSIGNAL}. Auch hier verläuft der Einschaltvorgang im unkritischen Bereich, das heißt zwischen einer vorgegebenen ersten (minimalen) Soll-Kennlinie in Abhängigkeit eines in einem Vorratsbehälter für Arbeitsmedium des Retarders minimal möglichen Druck und einer zweiten (maximalen) Soll-Kennlinie in Abhängigkeit eines in dem Vorratsbehälter maximal möglichen Druck.

## Patentansprüche

1. Verfahren zur Überwachung einer Bremsmomentänderung eines Retarders (1) insbesondere eines Kraftfahrzeugs, wobei die Bremsmomentänderung durch einen Stelldruck-Regelkreis mit einem in diesem installierten Drucksensor (2) geregelt wird, umfassend die folgenden Schritte:
1.1 mittels des im Stelldruck-Regelkreis installierten Drucksensors (2) wird der Stelldruck des Retarders (1) dynamisch erfasst;
1.2 der zeitliche Verlauf des erfassten Stelldrucks wird mit mindestens einem vorgegebenen Soll-Verlauf verglichen;
1.3 in Abhängigkeit des durchgeführten Ist-Soll-Vergleichs wird bei Erfüllung von vorgegebenen Kriterien eine Warnmeldung ausgegeben und/oder ein zukünftiges Einschalten des Retarders (1) durch einen Bediener, insbesondere Fahrzeugführer, verhindert.

2. Verfahren gemäß Anspruch 1, **dadurch gekennzeichnet, dass** der vorgegebene Soll-Verlauf in Form mindestens einer Soll-Kennlinie, insbesondere in einem Retarder-Steuergerät, gespeichert wird.

3. Verfahren gemäß einem der Ansprüche 1 oder 2, **dadurch gekennzeichnet, dass** der Vergleich durch das Retarder-Steuergerät ausgeführt wird.

4. Verfahren gemäß einem der Ansprüche 2 oder 3, **dadurch gekennzeichnet, dass** der vorgegebene Soll-Verlauf zwei Soll-Kennlinien umfasst, eine Vorwarn-Kennlinie und eine Stilllegungs-Kennlinie, wobei der zeitliche Verlauf des erfassten Stelldrucks mit beiden Kennlinien verglichen wird oder zunächst mit der Vorwarn-Kennlinie verglichen wird und im Fall einer durch den Stelldruck-Regelkreis vorgegebenen Bremsmomentabsenkung bei Überschreiten der Vorwarn-Kennlinie und im Fall einer durch den Stelldruck-Regelkreis vorgegebenen Bremsmomenterhöhung bei Unterschreiten der Vorwarn-Kennlinie anschließend mit der Stilllegungs-Kennlinie verglichen wird, und
bei Überschreiten der Vorwarn-Kennlinie im Fall der vorgegebenen Bremsmomentabsenkung und bei Unterschreiten der Vorwarn-Kennlinie im Fall der vorgegebenen Bremsmomenterhöhung eine Warnmeldung ausgegeben wird; und
bei Überschreiten der Stilllegungs-Kennlinie im Fall der vorgegebenen Bremsmomentabsenkung und bei Unterschreiten der Stilllegungs-Kennlinie im Fall der vorgegebenen Bremsmomenterhöhung ein zukünftiges Einschalten des Retarders (1) durch einen Bediener, insbesondere Fahrzeugführer, verhindert wird.

5. Verfahren gemäß einem der Ansprüche 2 bis 4, **dadurch gekennzeichnet, dass** die mindestens eine Soll-Kennlinie in Abhängigkeit von spezifischen Auslegungsgrößen des einzelnen Kraftfahrzeugsystems und variabler, erfassten Zustandsgrößen des Kraftfahrzeugsystems und/oder der Umgebung gespeichert wird.

6. Verfahren gemäß einem der Ansprüche 2 bis 5, **dadurch gekennzeichnet, dass** die mindestens eine Soll-Kennlinie als adaptive Kennlinie in Abhängigkeit von zu Beginn der Fahrzeugbetriebszeit erfassten Betriebsgrößen gespeichert wird.

7. Verfahren gemäß einem der Ansprüche 2 bis 6, **dadurch gekennzeichnet, dass** der Vergleich das Vergleichen der Zeitspannen zwischen zwei vorgegebenen Stelldruckpunkten des erfassten zeitlichen Verlaufs des Stelldrucks und der mindestens einen vorgegebenen Soll-Kennlinie umfasst.

8. Verfahren gemäß einem der Ansprüche 2 bis 7, **dadurch gekennzeichnet, dass** der Vergleich das Vergleichen der Stelldruckverlaufsgradienten an vorgegebenen Stelldruckpunkten des erfassten zeitlichen Verlaufs und der mindestens einen vorgegebenen Soll-Kennlinie umfasst.

9. Verfahren gemäß einem der Ansprüche 2 bis 8, **dadurch gekennzeichnet, dass** mindestens eine erste Soll-Kennlinie des minimalen Stelldrucks und eine zweite Soll-Kennlinie des maximalen Stelldrucks gespeichert wird.

10. Verfahren gemäß Anspruch 9, **dadurch gekennzeichnet, dass** eine Bremsmomenterhöhung eines Retarders überwacht wird, und die erste Soll-Kennlinie in Abhängigkeit eines in einem Vorratsbehälter für Arbeitsmedium des Retarders (1) minimal möglichen Druck erstellt wird, und die zweite Soll-Kennlinie in Abhängigkeit eines in dem Vorratsbehälter maximal möglichen Druck erstellt wird.

11. Verfahren gemäß einem der Ansprüche 1 bis 9, **dadurch gekennzeichnet, dass** ein Ausschaltvorgang des Retarders (1) überwacht wird.

12. Verfahren gemäß einem der Ansprüche 1 bis 9, **dadurch gekennzeichnet, dass** eine Bremsmomentreduzierung des Retarders auf ein vorgegebenes Bremsmoment überwacht wird.

13. Verwendung eines in einem Stelldruck-Regelkreis eines Retarders (1) eines Kraftfahrzeugs installierten Drucksensors (2) zur dynamischen Überwachung des Stelldrucks und zur Fehlererkennung.

## Claims

1. A method for monitoring a change in braking torque of a retarder (1), especially of a motor vehicle, with the change in braking torque being controlled by a servo-pressure control loop with a pressure sensor (2) installed in the same, comprising the following steps:
1.1 the servo-pressure of the retarder (1) is detected dynamically by means of the pressure sensor (2) installed in the servo-pressure control loop;
1.2 the time progress of the detected servo-pressure is compared with at least one predetermined setpoint progress;
1.3 depending on the performed comparison of setpoint and actual value, a warning message is issued upon fulfilling predetermined criteria and/or the future activation of the retarder (1) by an operator, especially the vehicle driver, is prevented.

2. A method according to claim 1, **characterized in that** the predetermined setpoint progress is stored in the form of at least one setpoint characteristic curve, especially in a retarder control device.

3. A method according to one of the claims 1 or 2, **characterized in that** the comparison is carried out by the retarder control device.

4. A method according to one of the claims 2 or 3, **characterized in that** the predetermined setpoint progress comprises two setpoint characteristic curves, a preliminary warning characteristic curve and a shutdown characteristic curve, with the time progress of the detected servo-pressure is compared with both characteristic curves or is compared at first with the preliminary warning characteristic curve and in the case of a breaking torque reduction predetermined by the servo-pressure control loop when exceeding the preliminary warning characteristic curve and in the case of a breaking torque increase predetermined by the servo-pressure control loop when falling below the preliminary warning characteristic curve is compared thereafter with the shutdown characteristic curve, and when exceeding the preliminary warning characteristic curve in the case of the predetermined braking torque reduction and when falling below the preliminary warning characteristic curve in the case of the preceding braking torque increase a warning message is issued, and when exceeding the shutdown characteristic curve in the case of the predetermined braking torque reduction and when falling below the shutdown characteristic curve in the case of the predetermined braking torque increase a further activation of the retarder by an operator, especially the vehicle driver, is prevented.

5. A method according to one of the claims 2 to 4, **characterized in that** the at least one setpoint characteristic curve is stored depending on specific design variables of the individual motor-vehicle system and variable detected state variables of the motor-vehicle system and/or the ambient environment.

6. A method according to one of the claims 2 to 5, **characterized in that** the at least one setpoint characteristic curve is stored as an adaptive characteristic curve depending on operational variables stored at the beginning of the vehicle operation time.

7. A method according to one of the claims 2 to 6, **characterized in that** the comparison comprises the comparing of time intervals between two predetermined servo-pressure points of the detected time progress of the servo-pressure and the at least one predetermined setpoint characteristic curve.

8. A method according to one of the claims 2 to 7, **characterized in that** the comparison comprises the comparing of the servo-pressure progress gradients at predetermined servo-pressure points of the detected time progress and the at least one predetermined setpoint characteristic curve.

9. A method according to one of the claims 2 to 8, **characterized in that** at least one first setpoint characteristic curve of the minimum servo-pressure and a second setpoint characteristic curve of the maximum servo-pressure are stored.

10. A method according to claim 9, **characterized in that** a braking torque increase of a retarder is monitored and the first setpoint characteristic curve is prepared depending on a pressure minimally possible in a storage reservoir for the working medium of the retarder (1) and the second setpoint characteristic curve is prepared depending on a pressure maximally possible in the storage reservoir.

11. A method according to one of the claims 1 to 9, **characterized in that** a cutoff process of the retarder (1) is monitored.

12. A method according to one of the claims 1 to 9, **characterized in that** a braking torque reduction of the retarder to a predetermined braking torque is monitored.

13. The use of a pressure sensor (2) installed in a servo-pressure control loop of a retarder (1) of a motor vehicle for dynamic monitoring of the servo-pressure and for recognizing faults.

## Revendications

1. Procédé pour la surveillance d'une modification du couple de freinage d'un retardateur (1), en particulier dans un véhicule à moteur, dans lequel la modification du couple de freinage est régulée par un circuit de régulation de la pression de réglage avec un capteur de pression (2) installé dans celui-ci, comprenant les étapes suivantes :
1.1 détection de la pression de réglage du retardateur (1) au moyen du capteur de pression (2) installé dans le circuit de régulation de la pression de réglage ;
1.2 comparaison de l'évolution dans le temps de la pression de réglage captée avec au moins une consigne d'évolution prédéterminée ;
1.3 en fonction de la comparaison réalisée entre valeur réelle et consigne, si des critères prédéterminés sont remplis, émission d'un message d'avertissement et/ou inhibition d'une activation future du retardateur (1) par un utilisateur, en particulier un conducteur du véhicule.

2. Procédé selon la revendication 1, **caractérisé en ce que** la consigne d'évolution prédéterminée est mémorisée sous la forme d'une courbe caractéristique de consigne, en particulier dans une unité de commande du retardateur.

3. Procédé selon l'une des revendications 1 ou 2, **caractérisé en ce que** la comparaison est réalisée par l'unité de commande du retardateur.

4. Procédé selon l'une des revendications 2 ou 3, **caractérisé en ce que** la consigne d'évolution prédéterminée comprend deux courbes caractéristiques de consigne, une courbe caractéristique d'avertissement et une courbe caractéristique d'arrêt, l'évolution dans le temps de la pression de réglage captée étant comparée avec les deux courbes caractéristiques ou comparée d'abord avec la courbe caractéristique d'avertissement et, en cas de réduction du couple de freinage prédéterminé par le circuit de régulation de la pression de réglage lorsque la courbe caractéristique d'avertissement est dépassée et en cas d'augmentation du couple de freinage par le circuit de régulation de la pression de réglage si la courbe caractéristique d'avertissement n'est pas atteinte, comparée ensuite avec la courbe caractéristique d'arrêt, et
si la courbe caractéristique d'avertissement est dépassée lors de la réduction prédéfinie du couple de freinage et si la courbe caractéristique d'avertissement n'est pas atteinte lors de l'augmentation prédéterminée du couple de freinage, un message d'avertissement est émis ; et
en cas de dépassement de la courbe caractéristique d'arrêt lors de la réduction prédéterminée du couple de freinage et si la courbe caractéristique d'arrêt n'est pas atteinte lors de l'augmentation prédéterminée du couple de freinage, une activation future du retardateur (1) par un utilisateur, en particulier un conducteur du véhicule, est empêchée.

5. Procédé selon l'une des revendications 2 à 4, **caractérisé en ce que** la courbe caractéristique de consigne au nombre d'une au moins est mémorisée en fonction de grandeurs de dimensionnement spécifiques de chaque système de véhicule à moteur et de grandeurs d'état variables captées relatives au système de véhicule à moteur et/ou à l'environnement.

6. Procédé selon l'une des revendications 2 à 5, **caractérisé en ce que** la courbe caractéristique de consigne au nombre d'une au moins est enregistrée sous la forme d'une caractéristique adaptative en fonction de grandeurs de fonctionnement captées au début du temps de fonctionnement du véhicule.

7. Procédé selon l'une des revendications 2 à 6, **caractérisé en ce que** la comparaison comprend une comparaison des intervalles de temps entre deux points de pression de réglage de l'évolution dans le temps captée pour la pression de réglage et de la courbe caractéristique de consigne prédéterminée au nombre d'une au moins.

8. Procédé selon l'une des revendications 2 à 7, **caractérisé en ce que** la comparaison comprend une comparaison des gradients d'évolution de la pression de réglage en des points de pression de réglage prédéterminés de l'évolution dans le temps captée et de la courbe caractéristique de consigne prédéterminée au nombre d'une au moins.

9. Procédé selon l'une des revendications 2 à 8, **caractérisé en ce qu'**au moins une première courbe caractéristique de consigne de la pression de réglage minimale et une deuxième courbe caractéristique de consigne de la pression de réglage maximale sont enregistrées.

10. Procédé selon la revendication 9, **caractérisé en ce qu'**une augmentation du couple de freinage d'un retardateur est surveillée et la première courbe caractéristique de consigne est établie en fonction d'une pression minimale possible dans un réservoir de fluide de travail pour le retardateur (1), et la deuxième courbe caractéristique de consigne est établie en fonction d'une pression maximale possible dans le réservoir.

11. Procédé selon l'une des revendications 1 à 9, **caractérisé en ce qu'**une opération d'arrêt du retardateur (1) est surveillée.

12. Procédé selon l'une des revendications 1 à 9, **caractérisé en ce qu'**une réduction du couple de freinage du retardateur jusqu'à un couple de freinage prédéterminé est surveillée.

13. Utilisation d'un capteur de pression (2) installé dans le circuit de régulation de la pression de réglage d'un retardateur (1) d'un véhicule à moteur pour la surveillance dynamique de la pression de réglage et la détection des erreurs.
